# EUROPEAN PATENT APPLICATION

(11) **EP 1 936 519 A1**
(43) Date of publication of application: **25.06.2008**
(21) Application number: 06798387.4
(22) Date of filing: 27.09.2006
(51) Int. Cl.: G06F 17/30, G01C 21/00, G08G 1/0969, G09B 29/00, G09B 29/10

(54) **SURROUNDING AREA SEARCH DATA CREATING SYSTEM, SURROUNDING AREA SEARCH SYSTEM, SURROUNDING AREA SEARCH DATA CREATING METHOD, SURROUNDING AREA SEARCH METHOD, AND NAVIGATION DEVICE**

(30) Priority: 28.09.2005 JP 2005282482
(71) Applicant: AISIN AW CO., LTD., Anjo-shi, Aichi 444-1192 (JP)
(72) Inventor: MATSUO, Akiko, Aichi 4448564 (JP); HIRAI, Kazumichi c/o Aisin AW CO., Aichi 4448564 (JP)
(74) Representative: Vossius & Partner
(86) International application number: PCT/JP2006/319191
(87) International publication number: WO 2007/037281

(57) **Abstract**

The present invention makes it possible to conduct a search for the most appropriate one of facilities, while a vehicle is driven on an automobile-only road. The present invention includes: a facility judgment processing means for judging whether a predetermined facility is positioned within a surrounding search area; a first data generation processing means for generating first data, in a case where the predetermined facility is positioned within the surrounding search area; a target point setting processing means for setting a target point at a predetermined location; a condition satisfaction judgment processing means for judging whether there is any facility that satisfies a predetermined data generation condition; a second data generation processing means for generating second data in correspondence with the target point, in a case where there are one or more facilities that satisfy the data generation condition; and a data record processing means for recording the first data and the second data onto a recording medium.

## Description

### TECHNICAL FIELD

The present invention relates to a surrounding search data generating system, a surrounding search system, a surrounding search data generating method, a surrounding search method, and a navigation apparatus.

### BACKGROUND ART

In conventional navigation apparatuses, a current position of a vehicle (i.e., a "current position") is detected with the use of, for example, a GPS (Global Positioning System) sensor, map data is read from a data recording unit, and a map screen is formed on a displaying unit, so that a vehicle position indicating the current position, a map of the surroundings of the vehicle position and the like are displayed on the map screen. Thus, the operator of such a navigation apparatus (i.e., the driver of the vehicle) is able to drive the vehicle in accordance with the vehicle position, the map of the surroundings of the vehicle position, and the like that are displayed on the map screen.

When the driver of the vehicle inputs a destination and specifies a search criterion, a route search process is performed based on the search criterion. Accordingly, a search is conducted for a route to drive from a starting point indicated as the current position to the destination, based on the map data. The route that has been found in the search, i.e., the "searched route", is displayed on the map screen together with the vehicle position, so that guidance for the searched route, i.e., a "route guidance", is provided. Thus, the driver is able to drive the vehicle along the searched route that is displayed.

While the driver is driving a vehicle on a road, if he/she wishes to search for facilities (i.e., objects) that are positioned in the surroundings of the current position, the navigation apparatus conducts a search for facilities that are positioned within a predetermined area (e.g., an area having a radius of 30 kilometers) in which the current position is located at the center. Of the facilities that have been found in the search, the navigation apparatus displays, in a list as a search result, only the facilities that are positioned within a band-shaped area having a predetermined width that has been specified along the road (e.g., 100 meters to the left and to the right of the road) on which the vehicle is driven. In a case where the road on which the vehicle is driven is an automobile-only road, such as an expressway or a toll road, for example, when the driver specifies an exit of the automobile-only road, the navigation apparatus conducts a search for facilities that are positioned in the surroundings of the specified exit (See, for example, Patent Document 1.).
Patent Document 1: Japanese Patent Application Publication No. 2004-170233

### DISCLOSURE OF THE INVENTION

### [Problems to be Solved by the Invention]

However, the conventional navigation apparatus conducts a search for only the facilities that are positioned in the surroundings of the specified exit. Thus, in a case where the driver of the vehicle wishes to find the most appropriate facility, for example, a facility that he/she is able to reach in a short period of time, the driver needs to specify a plurality of exits, one by one. In this situation, not only the operation performed on the operating unit is bothersome, but also the level of efficiency of the search becomes low.

It is an object of the present invention to solve the problems of the conventional navigation apparatuses and to provide a surrounding search data generating system, a surrounding search system, a surrounding search data generating method, a surrounding search method, and a navigation apparatus that make it possible to conduct a search for the most appropriate one of facilities while a vehicle is driven on an automobile-only road, to simplify the operation performed on the operating unit, and to enhance the level of efficiency of the search.

### [Means for Solving the Problems]

In order to achieve the object, a surrounding search data generating system according to the present invention includes: a facility judgment processing means for judging whether a predetermined facility is positioned within a surrounding search area that is specified along a road having an entrance and an exit; a first data generation processing means for generating, in a case where the predetermined facility is positioned within the surrounding search area, data of the predetermined facility as first data; a target point setting processing means for setting, at a predetermined location, a target point used as a target for generating second data; a condition satisfaction judgment processing means for judging whether there is any facility that satisfies a predetermined data generation condition; a second data generation processing means for generating, in a case where there are one or more facilities that satisfy the predetermined data generation condition, data of the one or more facilities that satisfy the predetermined data generation condition as second data, in correspondence with the target point; and a data record processing means for recording the first data and the second data onto a recording medium.

### [Effects of the Invention]

According to the present invention, not only for the facilities that are positioned within the surrounding search area, but also for the facilities that satisfy the data generation condition, the second data is generated, so that the facilities are used as the targets of the surrounding search. Thus, it is possible to easily conduct a search for the most appropriate facility for the driver. Consequently, it is possible to not only simplify the operation performed on the operating unit, but also enhance the level of efficiency of the search.

### BRIEF DESCRIPTION OF THE DRAWINGS

[FIG. 1]

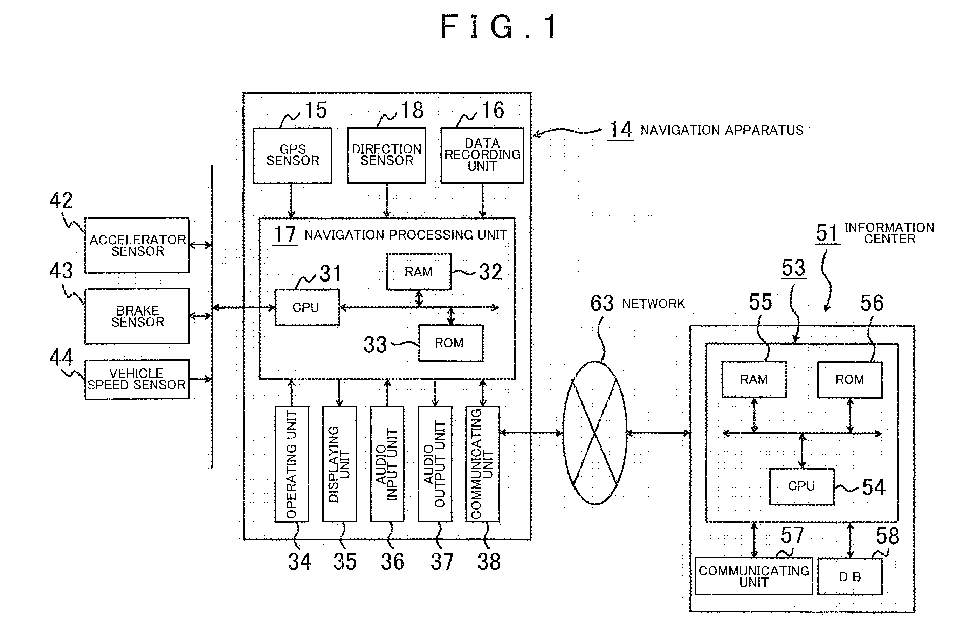

   FIG. 1 is a diagram that shows a navigation system according to a first embodiment of the present invention.
[FIG. 2]

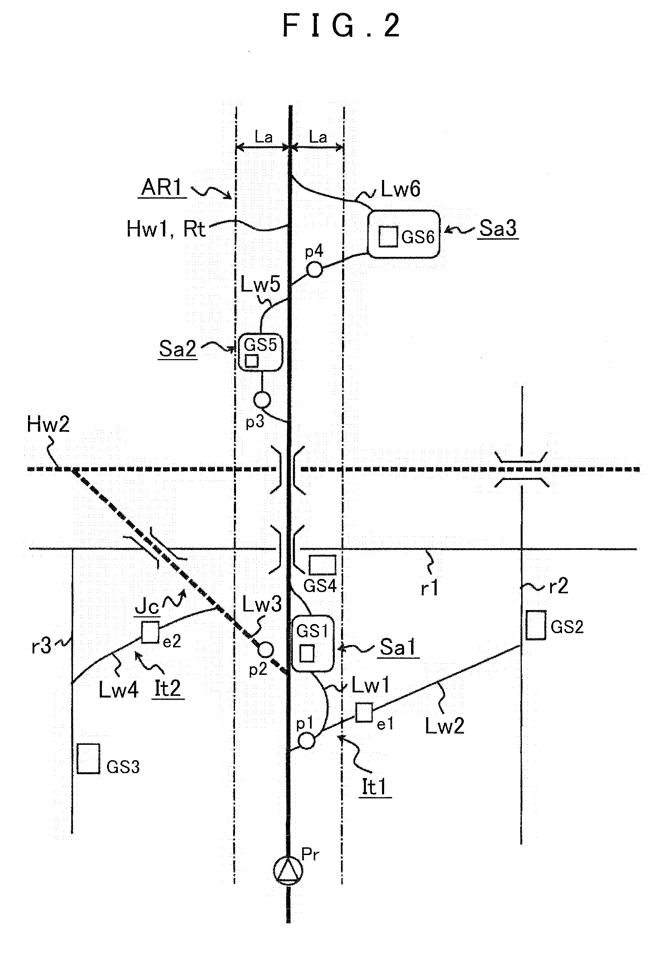

   FIG. 2 is a conceptual drawing of a surrounding search according to the first embodiment of the present invention.
[FIG. 3]

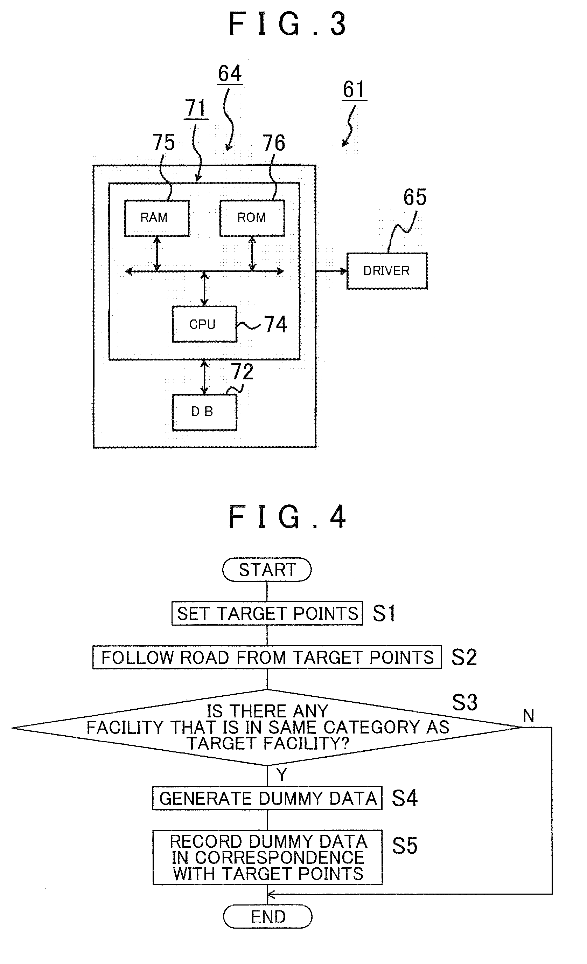

   FIG. 3 is a schematic diagram of a data generating apparatus according to the first embodiment of the present invention.
[FIG. 4]
   FIG. 4 is a flowchart that shows a method for generating dummy data included in surrounding search data according to the first embodiment of the present invention.
[FIG. 5]

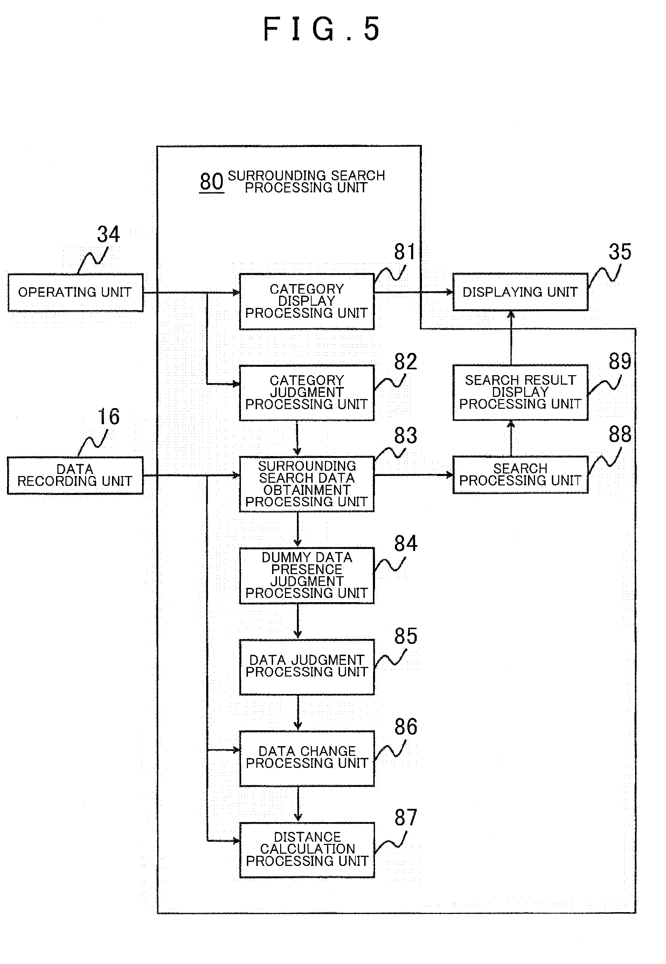

   FIG. 5 is a functional block diagram of a navigation apparatus according to the first embodiment of the present invention.
[FIG. 6]

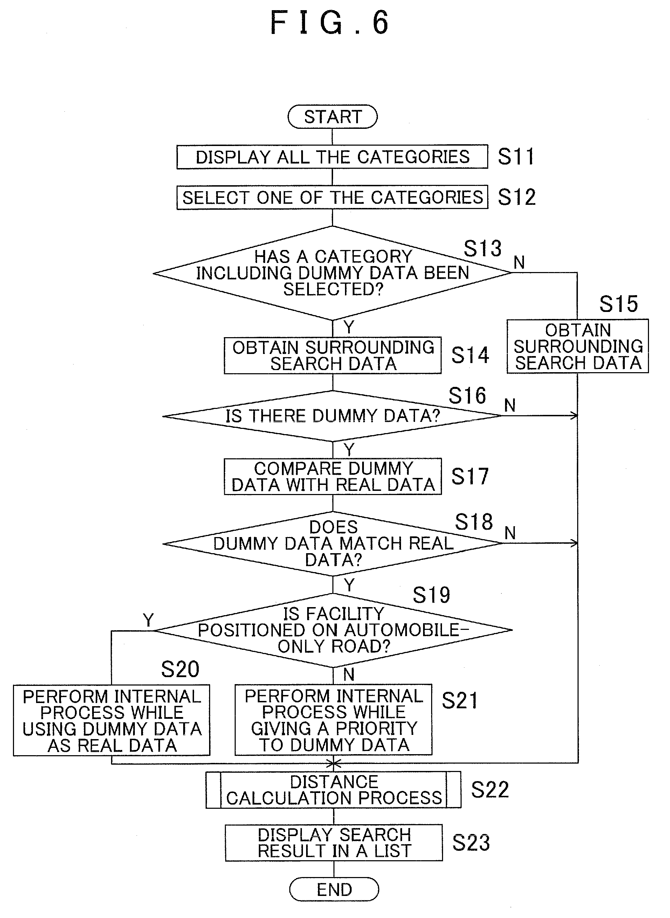

   FIG. 6 is a flowchart that shows an operation performed by a surrounding search processing means according to the first embodiment of the present invention.
[FIG. 7]

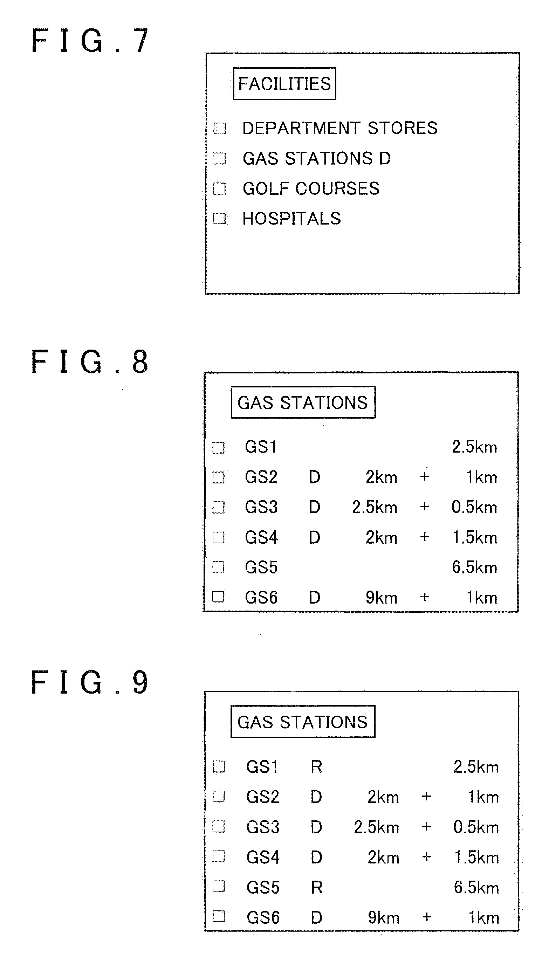

   FIG. 7 is a drawing that shows an example of a category selecting screen according to the first embodiment of the present invention.
[FIG. 8]
   FIG. 8 is a drawing that shows an example of a search result display screen according to the first embodiment of the present invention.
[FIG. 9]
   FIG. 9 is a drawing that shows an example of a search result display screen according to a second embodiment of the present invention.

### [Brief Explanation of the Reference Numerals]

14: NAVIGATION APPARATUS
35: DISPLAYING UNIT
51: INFORMATION CENTER
63: NETWORK
AR1: SURROUNDING SEARCH AREA
e1, e2: EXIT
Hw1, Hw2: AUTOMOBILE-ONLY ROAD
Jc: JUNCTION
Pr: CURRENT POSITION
p1 - p4: TARGET POINT
r1 - r3: GENERAL ROAD
Sa1 - Sa3: SERVICE AREA

### BEST MODES FOR CARRYING OUT THE INVENTION

Embodiments of the present invention will be explained in detail, with reference to the accompanying drawings.

FIG. 1 is a diagram that shows a navigation system according to a first embodiment of the present invention.

In the drawing, 14 denotes an information terminal such as, for example, an in-vehicle navigation apparatus that is installed in a vehicle. 63 denotes a network. 51 denotes an information center that serves as an information provider. A navigation system is constituted by elements including the navigation apparatus 14, the network 63, and the information center 51.

The navigation apparatus 14 includes: a GPS sensor 15 that detects a current position of the vehicle on the earth by receiving a satellite signal generated by an artificial satellite; a data recording unit 16 that serves as an information recording unit and also as a storage device and that has recorded therein map data used as information related to maps as well as other various types of information such as information related to facilities; a navigation processing unit 17 that performs various types of computational processes such as a navigation process, based on various types of information; a direction sensor 18 that detects a direction in which the vehicle is oriented, i.e., a direction of the vehicle; an operating unit 34 that serves as a first input unit and is used by a driver of the vehicle who is an operator of the navigation apparatus 14 for making predetermined inputs; a displaying unit 35 that serves as a first output unit and provides various types of displays with images displayed on a screen (not shown in the drawing) so as to inform the driver; an audio input unit 36 that serves as a second input unit and is used for making predetermined inputs with audio; an audio output unit 37 that serves as a second output unit that provides various types of indications with audio so as to inform the driver, and a communicating unit 38 that serves as a transmitting and receiving unit and functions as a communication terminal. The GPS sensor 15, the data recording unit 16, the direction sensor 18, the operating unit 34, the displaying unit 35, the audio input unit 36, the audio output unit 37, and the communicating unit 38 are connected to the navigation processing unit 17.

The GPS sensor 15 is configured so as to be able to detect the current position and also to detect a current time, the speed of the vehicle, and the like.

As shown in FIG. 1, according to the present embodiment, the GPS sensor 15 and the direction sensor 18 are described as separate elements. However, it is acceptable to have another arrangement in which a current position is detected based on a combination of position coordinates, a direction, and a traveling direction with the use of the GPS sensor 15 and the direction sensor 18 that together serve as a current position detecting unit. Alternatively, because the GPS sensor 15 is able to calculate the speed and the traveling direction of the vehicle based on the received satellite signals, it is acceptable to have yet another arrangement in which the current position is detected by using only the GPS sensor 15.

Also, although the GPS sensor 15 is used according to the present embodiment, it is acceptable to use, instead of the GPS sensor 15, a distance sensor, a steering sensor, an altimeter, and the like, which are not shown in the drawing, individually or in combination. Also, although the direction sensor 18 is used in order to detect the direction of the vehicle according to the present embodiment, it is acceptable to use, instead of the direction sensor 18, a gyro sensor, a geomagnetic sensor, and the like, which are not shown in the drawing, in combination.

Further, connected to the navigation processing unit 17 are an accelerator sensor 42 that serves as an engine load detecting unit and detects an operation performed by the driver on an accelerator pedal (not shown in the drawing), based on an accelerator opening degree; a brake sensor 43 that serves as a braking detecting unit and detects an operation performed by the driver on a brake pedal (not shown in the drawing), based on an amount by which the brake pedal is depressed; and a vehicle speed sensor 44 that serves as a vehicle speed detecting unit and detects a vehicle speed S. An operation information detecting unit that detects the information related to the operations performed by the driver on the vehicle is constituted by elements including the accelerator sensor 42 and the brake sensor 43. The GPS sensor 15 is able to detect the vehicle speed, in addition to the current position and the direction of the vehicle.

The data recording unit 16 has a map database that includes map data files. The map database stores therein map data. The map data includes intersection data related to intersections, node data related to nodes, road data related to roads and road links, search data that has been processed for the use in searches, facility data related to facilities, and surrounding search data that has been generated in order to conduct a search for facilities that are positioned in the surroundings of a route that has been specified in advance or a current position of the vehicle, in other words, in order to conduct a surrounding search, as well as feature data related to features. The data recording unit 16 also has recorded therein data used for outputting predetermined information via the audio output unit 37.

In addition, the data recording unit 16 has formed therein a statistic database that includes statistic data files and a driving history database that includes driving history data files. The statistic data files and the driving history data files respectively store therein statistic data and driving history data, as actual record data.

The statistic data is history information that indicates the actual records, i.e., a history, of traffic information that was provided in the past. The statistic data is generated by using various types of information individually or in combination and, as necessary, applying a processing step and/or a statistic process thereto. Examples of the various types of information include: traffic information that was provided in the past by a road traffic information center (not shown in the drawing) such as a VICS (a registered trademark: Vehicle Information and Communication System) center or a RDS-TMC (Radio Data System - Traffic Message Channel: traffic information service using an FM multiplex broadcast) that serves as an information provider; road traffic census information that is data indicating a traffic amount based on a road traffic census provided by the Japanese Ministry of Land, Infrastructure, and Transport; and road time table information provided by the Japanese Ministry of Land, Infrastructure, and Transport.

The data items in the statistic data include: link numbers corresponding to the road links; direction flags indicating directions in which vehicles are driven; information types indicating the types of information; the levels of traffic congestion corresponding to predetermined time periods; link required travel time indicating required travel time to drive the road links corresponding to predetermined time periods; and average data of the link required travel time corresponding to different days of the week (for example, days-of-the-week average data).

The driving history data is actual record information that indicates actual driving records, i.e., the actual records of the driving of the vehicles that correspond to the roads on which the vehicles have been driven and have been collected by the information center 51 from a plurality of vehicles such as the vehicle on which the navigation apparatus is installed and/or other vehicles. The driving history data is calculated and accumulated as probe data, based on the driving data.

The data items in the driving history data include: link required travel time that is required in order to drive the road links corresponding to predetermine time periods; and levels of traffic congestion experienced while driving the road links corresponding to predetermined time periods. The statistic data may include the driving history data. Also, according to the present embodiment, the levels of traffic congestion are used as a traffic congestion index that indicates the degree of traffic congestion. The levels of traffic congestion include "congested", "crowded", and "not congested".

The data recording unit 16 includes a disk (not shown in the drawing) such as a hard disk, a CD, a DVD, an optical disk, or the like, for the purpose of recording therein various types of data. The data recording unit 16 also includes a head, which is not shown in the drawing, such as a read/write head that is used for reading or writing various types of data. It is possible to use a memory card or the like, as the data recording unit 16.

According to the present embodiment, the data recording unit 16 is configured so as to include the map database, the statistic database, the driving history database, and the like. However, it is also acceptable to configure the information center 51 so as to include the map database, the statistic database, the driving history database, and the like.

The navigation processing unit 17 includes: a CPU 31 that serves as a controlling device that performs the overall control of the navigation apparatus 14 and also serves as a computing device; a RAM 32 that is used as a working memory while the CPU 31 performs various types of computational processes; a ROM 33 that has recorded therein a program used for the controlling purposes as well as other various types of programs for conducting a search for a route to a destination and for providing route guidance; and a flash memory (not shown in the drawing) that is used for recording therein various types of data and programs.

According to the present embodiment, various types of programs are recorded in the ROM 33 and various types of data are recorded in the data recording unit 16. However, it is acceptable to have another arrangement in which the programs and the data are recorded in a disk or the like. In this case, it is possible to read the programs, the data, and the like from the disk and to write the read programs and the read data into a flash memory. Thus, it is possible to update the programs, the data, and the like by replacing the disk or the like. Further, it is possible to receive the programs, the data, and the like via the communicating unit 38 and to write the received programs and the received data into the flash memory included in the navigation processing unit 17.

The operating unit 34 is operated by the driver and is used for correcting a current position that is indicated when the vehicle starts being driven, inputting a starting point and/or a destination, inputting a location point to drive through, and/or causing the communicating unit 38 to operate. As the operating unit 34, it is acceptable to use a keyboard, a mouse, and the like that are provided independently of the displaying unit 35. Alternatively, as the operating unit 34, it is acceptable to use a touch panel that allows a user to perform predetermined input operations through a touching operation or a clicking operation performed on an image operating unit including various types of keys, switches, and buttons that are displayed as images on a screen formed on the displaying unit 35.

A display device may be used as the displaying unit 35. On the various types of screens formed on the displaying unit 35, it is possible to display the current position of the vehicle as a vehicle position and to display a direction of the vehicle as a vehicle direction, to display maps, a searched route, guidance information along the searched route, and traffic information, to display a distance to a next intersection based on the searched route, and to display a traveling direction at the next intersection. In addition, it is possible to display operation guidance, operation menus, and guidance related to the keys for the image operating unit, the operating unit 34, the audio input unit 36, and the like, as well as broadcast programs provided by the FM multiplex broadcast.

The audio input unit 36 is configured with a microphone or the like (not shown in the drawings), so that it is possible to input necessary information by using audio. The audio output unit 37 includes a voice synthesizer and a speaker, which are not shown in the drawing. From the audio output unit 37, the searched route, the guidance information, the traffic information, and the like are output by using, for example, voice synthesized by the voice synthesizer.

The communicating unit 38 includes: a beacon receiver that receives, as a radiowave beacon or an optical beacon, various types of information including current traffic information transmitted from the road traffic information center and other general information, via radiowave beacon devices or optical beacon devices that are provided on the roads; and an FM receiver that receives various types of information as an FM multiplex broadcast via an FM broadcast station. The traffic information includes traffic congestion information, traffic regulation information, parking information, traffic accident information, and information regarding how crowded service areas are. The general information includes news, weather forecasts, and the like. The beacon receiver and the FM receiver are configured so as to be provided in a unit as a VICS receiver; however, it is acceptable to provide the beacon receiver and the FM receiver as separate units.

The traffic information includes: information types indicating the types of information; mesh numbers each used for identifying a mesh; link numbers each used for identifying a road link that connects two location points (for example, two intersections) and each indicating whether the road link is in the upstream direction or in the downstream direction; and link information that shows the contents of the provided information in correspondence with the link numbers. For example, when the traffic information is traffic congestion information, the link information includes: congestion beginning-point data indicating a distance from a starting point of the road link to the beginning point of traffic congestion; the level of traffic congestion; a congestion length indicating the distance of a congested section from the beginning point of the traffic congestion to the end of the traffic congestion, and link required travel time indicating a time period required to drive the road link.

The communicating unit 38 is configured so as to be able to receive, from the information center 51, various types of data such as the map data, the statistic data, the driving history data, as well as various types of information such as the traffic information and the general information, via the network 63.

In order to realize this arrangement, the information center 51 includes: a server 53; a communicating unit 57 that is connected to the server 53; and a database (DB) 58 that serves as an information recording unit. The server 53 includes a CPU 54 that serves as a controlling device and also serves as a computing device, a RAM 55, and a ROM 56. The database 58 has recorded therein various types of data that are the same as the various types of data recorded in the data recording unit 16, such as the map data, the statistic data, and the driving history data. Further, the information center 51 is configured so as to be able to provide, in a real-time manner, various types of information including the current traffic information that has been transmitted from the road traffic information center and general information, as well as driving history data that has been collected from a plurality of vehicles (such as the vehicle on which the navigation apparatus is installed and/or other vehicles).

The navigation system, the navigation processing unit 17, the CPU 31, the CPU 54, the server 53 function as a computer, individually or in combination of two or more of them, so as to perform computational processes based on the various types of programs and the various types of data. Also, a recording medium is configured with a disk, a memory card, or the like that is set in the data recording unit 16. In addition, a recording medium is configured with the RAM 32, the RAM 55, the ROM 33, the ROM 56, the database 58, the flash memory, or the like. As the computing device, it is acceptable to use an MPU or the like, instead of the CPU 31 or the CPU 54.

Next, a basic operation of the navigation system configured as described above will be explained.

First, when the driver operates the operating unit 34 so that the navigation apparatus 14 is activated, a navigation initialization processing means (i.e., a navigation initialization processing unit), which is not shown in the drawing, that is included in the CPU 31 performs a navigation initialization process, so as to read a current position of the vehicle that has been detected by the GPS sensor 15 and the direction of the vehicle that has been detected by the direction sensor 18 and also to initialize various types of data. Next, a matching processing means (i.e., a matching processing unit), which is not shown in the drawing, that is included in the CPU 31 performs a matching process so as to identify the current position by determining on which road link the current position is located, based on a locus of the current position that has been read and the shapes and the positional arrangements of the road links that constitute the roads in the surrounding of the current position.

After that, an information obtainment processing means (i.e., an information obtainment processing unit), which is not shown in the drawing, that is included in the CPU 31 performs an information obtainment process, so as to obtain the map data by either reading it from the data recording unit 16 or receiving it from the information center 51 or the like via the communicating unit 38. In a case where the information obtainment processing means obtains the map data from the information center 51 or the like, the information obtainment processing means downloads the received map data into a flash memory.

Subsequently, a display processing means (i.e., a display processing unit), which is not shown in the drawing, that is included in the CPU 31 performs a display process so as to form one of the various types of screens on the displaying unit 35. For example, a map display processing means (i.e., a map display processing unit) included in the display processing means performs a map display process so as to form a map screen on the displaying unit 35, display a map of the surroundings on the map screen, display the current position as the vehicle position, and display the direction of the vehicle as the vehicle direction.

Accordingly, the driver of the vehicle is able to drive the vehicle according to the map, the current position of the vehicle, and the direction of the vehicle.

Also, when the driver operates the operating unit 34 and inputs a destination, a destination setting processing means (i.e., a destination setting processing unit), which is not shown in the drawing, that is included in the CPU 31 performs a destination setting process so as to set a destination. The driver is also able to input and set a starting point, as necessary. Also, the driver is able to register a predetermined location point in advance and sets the registered location point as a destination. After that, when the driver operates the operating unit 34 and inputs a search criterion, a search criterion setting processing means (i.e., a search criterion setting processing unit), which is not shown in the drawing, that is included in the CPU 31 performs a search criterion setting process so as to set the search criterion.

When the destination and the search criterion have been set as explained above, a route search processing means (i.e., a route search processing unit), which is not shown in the drawing, that is included in the CPU 31 performs a route search process so as to read the current position, the destination, and the search criterion and also reads the search data and the like from the data recording unit 16. The route search processing means conducts a search for a route to travel from the starting point indicated as the current position to the destination, under the search criterion, based on the current position, the destination, the search data, and the like, and outputs route data that indicates a searched route. In this situation, a route that has the smallest sum of link costs that are given to the road links is selected as the searched route.

Also, in a case where a road has a plurality of lanes, and also a driving lane has been detected, the route search processing means conducts the search for the searched route in units of lanes. In this situation, the route data contains a lane number of the driving lane or the like.

Subsequently, a guidance processing means (i.e., a guidance processing unit), which is not shown in the drawing, that is included in the CPU 31 performs a guidance process so as to provide route guidance. To realize this process, a route display processing means (i.e., a route display processing unit) included in the guidance processing means performs a route display process so as to read the route data and display the searched route on the map screen, according to the route data. In the case where the search is conducted for the searched route in units of lanes, the route display processing means provides route guidance in units of lanes at a predetermined location point such as a guidance intersection and displays the driving lane on which the route guidance is provided in an enlarged map of the intersection. In addition, as necessary, an audio output processing means (i.e., an audio output processing unit) that is included in the guidance processing means performs an audio output process so as to provide route guidance by outputting the searched route using voice via the audio output unit 37.

Also, the information center 51 is able to perform a route search process. In this situation, the CPU 31 transmits the current position, the destination, the search criterion, and the like to the information center 51. When the information center 51 has received the current position, the destination, the search criterion, and the like, a route search processing means (i.e., a route search processing unit), which is not shown in the drawing, that is included in the CPU 54 performs a route search process that is the same as the one performed by the CPU 31 so as to read the search data and the like from the database 58. The route search processing means conducts a search for a route to travel from the starting point to the destination, under the search criterion, based on the current position, the destination, the search data, and the like and outputs route data that indicates a searched route. Subsequently, a transmission processing means (i.e., a transmission processing unit), which is not shown in the drawing, that is included in the CPU 54 performs a transmission process so as to transmit the route data to the navigation apparatus 14. Thus, in the navigation apparatus 14, when a basic information obtainment processing means (i.e., a basic information obtainment processing unit), which is not shown in the drawing, that is included in the CPU 31 has received the route data from the information center 51, the guidance processing means performs the route guidance as described above.

In a case where there is a guidance intersection on the searched route, when the vehicle has reached a route guidance location point that is positioned a predetermined distance (e.g., X meters) before the guidance intersection, an enlarged intersection map display processing means (i.e., an enlarged intersection map display processing unit) included in the guidance processing means performs an enlarged intersection map display process so as to generate an enlarged intersection map as described above in a predetermined area of the map screen and provide route guidance by using the enlarged intersection map. More specifically, the enlarged intersection map display processing means displays, in the enlarged intersection map, a map for the surroundings of the guidance intersection, the searched route, landmarks such as facilities that can be used as landmarks at the guidance intersection. In the case where the route guidance is provided in units of lanes, the enlarged intersection map display processing means also displays the driving lane. In addition, as necessary, the audio output processing means outputs audio instruction, for example, "Turn left after X meters" from the audio output unit 37 so as to provide the route guidance.

As additional information, it is possible to use the navigation apparatus 14 or the navigation system as a surrounding search system so as to conduct a search for a facility (i.e., an object) that is positioned in the surroundings of the current position, the destination, the searched route, and the like. When the driver operates the operating unit 34 or the audio input unit 36 and instructs that, for example, a search should be conducted for a facility that is positioned in the surroundings of the searched route, the surrounding search data is read from the data recording unit 16, the database 58, or the like so that a search is conducted for a facility positioned in the surroundings of the searched route, and the driver is informed of the facility found in the search.

Next, a method for generating the surrounding search data will be explained.

FIG. 2 is a conceptual drawing of the surrounding search according to the first embodiment of the present invention. FIG. 3 is a schematic diagram of a data generating apparatus according to the first embodiment of the present invention. FIG. 4 is a flowchart that shows a method for generating dummy data included in the surrounding search data according to the first embodiment of the present invention.

In FIG. 2, Pr denotes a current position. Hwi (i = 1, 2, ...) denotes an automobile-only road such as an expressway or a toll road that has one or more entrances and exits and of which usable entrances and exits are limited. rj (j = 1, 2, ...) denotes a general road such as a national road or a prefectural road. In the present embodiment, the automobile-only road Hw1 serves as a searched route Rt.

Lwα (α = 1, 2, ...) denotes a rampway used as a connection path. Itβ (β = 1, 2, ...) denotes an interchange. eβ (β = 1, 2, ...) denotes an exit that is a gate provided at an interchange Itβ. Say (γ = 1, 2, ...) denotes a service area that is provided as a "stop-over" area. In the example according to the present embodiment, service areas (Say) are used as "stop-over" areas; however, it is also acceptable to use parking areas as "stop-over" areas. Each of the service areas (Say) has a parking space, a service facility such as a restaurant, as well as a gas station. GSδ (δ = 1, 2, ...) denotes a gas station that is provided in a service area (Saγ), on a general road rj, or the like.

At a service area Sa1, a rampway Lw1 branches off from the main line of the automobile-only road Hw1 and goes back into the main line. A gas station GS1 is provided on the rampway Lw1. A rampway Lw2 is provided at an interchange It1 so as to connect the automobile-only road Hw1 and a general road r2 together. An exit e1 is provided on the rampway Lw2. A gas station GS2 is provided on the general road r2, whereas a gas station GS4 is provided on a general road r1.

The rampway Lw3 connects the automobile-only road Hw1 and an automobile-only road Hw2 together at a junction Jc. A rampway Lw4 branches off from the rampway Lw3 at a predetermined point so as to connect the rampway Lw3 and a general road r3 together. An exit e2 is provided on the rampway Lw4. A gas station GS3 is provided on the general road r3.

At a service area Sa2, a rampway Lw5 branches off from the main line of the automobile-only road Hw1 and goes back into the main line. A gas station GS5 is provided on the rampway Lw5. At a service area Sa3, a rampway Lw6 branches off from the main line of the automobile-only road Hw1 and goes back into the main line. A gas station GS6 is provided on the rampway Lw6.

Next, the method for generating the surrounding search data will be explained, with reference to FIGS. 3 and 4.

A disk (not shown in the drawing) that is to be set into the data recording unit 16 (FIG. 1) is produced by a disk manufacturer who is an information generator. Thus, the disk manufacturer generates and edits the surrounding search data and records the surrounding search data onto the disk, by using a data generating apparatus 61. It is also possible to generate or edit the surrounding search data and to record the surrounding search data into a flash memory or the GPS sensor 15, by using the navigation apparatus 14 or the server 53. In this situation, various types of processes performed by a surrounding search data generating unit 64 included in the data generating apparatus 61 are performed by the navigation processing unit 17 or the server 53.

The data generating apparatus 61 includes a driver 65 in addition to the surrounding search data generating unit 64. The driver 65 drives a recording head or the like, which is not shown in the drawing, in order to record the surrounding search data generated by the surrounding search data generating unit 64 onto the disk.

The surrounding search data generating unit 64 includes a server 71 and a database (DB) 72. The server 71 includes: a CPU 74 that serves as a computing device; a RAM 75 that is used as a working memory while the CPU 74 performs various types of computational processes; and a ROM 76 that has recorded thereon various types of data, programs, and the like. The database 72 has recorded thereon data that is the same as the data recorded in the data recording unit 16 or the database 58. A surrounding search data generation processing means (i.e., a surrounding search data generation processing unit), which is not shown in the drawing, that is included in the CPU 74 performs a surrounding search data generation process so as to generate surrounding search data regarding a predetermined road such as an automobile-only road Hwi, based on the map data that has been read from the database 72 and to record the generated surrounding search data onto the disk. The CPU 74 included in the data generating apparatus 61 functions as a computer.

When surrounding search data is generated for an automobile-only road Hwi, for example, for the autorzzobile-only road Hw1 shown in FIG. 2, a surrounding search area AR1 is specified in advance along the automobile-only road Hw1, the surrounding search area AR1 having a width of a predetermined distance La (e.g., 100 meters) to the left and to the right of the automobile-only road Hw1. Data regarding the facilities that are positioned within the surrounding search area AR1 are recorded onto the disk as the surrounding search data, while being classified by category. The surrounding search data includes the name of each of the facilities, coordinates indicating the position of each of the facilities, information about each of the facilities, a link number indicating a road link along which each of the facilities is positioned, and the like.

In this situation, the distance La can be arbitrarily selected when the surrounding search data is generated. However, when the distance La is longer, because the surrounding search area AR1 becomes larger and the number of facilities to be found in the search becomes larger, it becomes more difficult for the driver to find the most appropriate one of the facilities. On the other hand, when the distance La is shorter, because the surrounding search area AR1 becomes smaller and the number of facilities to be found in the search becomes smaller, it becomes more difficult to detect the most appropriate facility for the driver.

To cope with this situation, according to the present embodiment, the surrounding search data is generated and recorded onto the disk in such a manner that, even if the distance La is set to be short, it is possible to conduct a search also for the facilities that are positioned on the outside of the surrounding search area AR1, if the facilities satisfy a predetermined data generation condition.

To realize this arrangement, the surrounding search data includes first data and second data. The first data is real data, which is data of the facilities that are actually positioned within the surrounding search area AR1. The second data is dummy data, which is data of the facilities that is generated when the data generation condition is satisfied, no matter whether the facilities are actually positioned within the surrounding search area AR1 or not. The dummy data is data that is expected to be useful for the driver, no matter whether the facilities are positioned within the surrounding search area AR1 or not. The dummy data is set, generated, and recorded onto the disk, by using a format as if the facilities were positioned within the surrounding search area AR1.

According to the present embodiment, when the real data is to be generated, a facility judgment processing means (i.e., a facility judgment processing unit) that is included in the surrounding search data generation processing means performs a facility judgment process so as to judge whether there is any facility in the surrounding search area AR1 that is in the same category as a facility used as a target for which the surrounding search data is to be generated. In a case where there are one or more facilities in the surrounding search area AR1 that are in the same category as the facility used as the target for which real data is to be generated, a real data generation processing means (i.e., a real data generation processing unit) that is included in the surrounding search data generation processing means and serves as a first data generation processing means performs a first data generation process, which is a real data generation process, so as to generate data of the one or more facilities as the first data, which is the real data. After that, a data record processing means (i.e., a data record processing unit) that is included in the surrounding search data generation processing means performs a data record process so as to record the real data onto the disk. The real data includes the name of each of the facilities, coordinates indicating the position of each of the facilities, information about each of the facilities, a link number indicating a road link along which each of the facilities is positioned, and the like.

When the dummy data is to be generated, first, a target point setting processing means (i.e., a target point setting processing unit) that is included in the surrounding search data generation processing means performs a target point setting process so as to set, as target points pε (ε = 1, 2, ...), location points used as the targets for generating dummy data, at predetermined locations within the surrounding search area AR1 such as, in the example of the present embodiment, in the vicinity of the branching points of the roads that branch off from an automobile-only road Hwi, such as, in the example of the present embodiment, in the vicinity of the branching points of the rampways Lwα. It is also acceptable to set exits of an automobile-only road Hwi as the target points, as necessary.

Next, a condition satisfaction judgment processing means (i.e., a condition satisfaction judgment processing unit) that is included in the surrounding search data generation processing means performs a condition satisfaction judgment process so as to judge, with regard to the facility used as the target for which the surrounding search data is to be generated, whether the data generation condition for generating dummy data is satisfied or not. To perform the judgment process, the condition satisfaction judgment processing means follows the road while taking a predetermined area such as an area within a distance threshold value (e.g., 2 kilometers, in the example of the present embodiment) in terms of the linear distance from each of the target points pε and judges whether, in each of the areas, there is any facility that is in the same category as the facility used as the target for which the surrounding search data is to be generated. The road is followed, while traffic regulations such as one-way streets are taken into consideration. Alternatively, instead of following the road, it is acceptable to perform a search process so as to conduct a search for a route to drive from the target point pε to each of the facilities. Also, it is acceptable to change the distance threshold value, as necessary.

In a case where the data generation condition is satisfied, and also there are one or more facilities within the area that are in the same category as the facility used as the target for which the dummy data is to be generated, a dummy data generation processing means (i.e., a dummy data generation processing unit) that is included in the surrounding search data generation processing means and serves as a second data generation processing means performs a second data generation process, which is a dummy data generation process, so as to generate data of the facilities as the second data, which is the dummy data, in correspondence with each of the target points pε, The dummy data includes the position of each of the target points pε, the name of each of the facilities, coordinates indicating the position of each of the facilities, information about each of the facilities, a linear distance from the target point pε to each of the facilities, a route distance that is measured along the road, and the like.

Subsequently, the data record processing means performs a data record process so as to record the dummy data onto the disk in correspondence with the target points pε.

For example, in FIG. 2, a target point p1 is set on the rampways Lw1 and Lw2 that branch off from the automobile-only road Hw1 in correspondence with the service area Sa1 and the exit e1. A target point p2 is set on the rampways Lw3 and Lw4 in correspondence with the junction Jc and the exit e2. A target point p3 is set on the rampway Lw5 in correspondence with the service area Sa2. A target point p4 is set on the rampway Lw6 in correspondence with the service area Sa3.

After that, for example, when surrounding search data is to be generated regarding a gas station GSδ along the automobile-only road Hw1, because the gas station GS1 is actually positioned within the surrounding search area AR1 that is specified along the automobile-only road Hw1, the data of the gas station GS1 will be recorded as real data. Also, because the gas station GS1 is positioned within 2 kilometers from the target point p1 in terms of the linear distance, the data of the gas station GS 1 will also be recorded as dummy data, in correspondence with the target point p1.

Because a gas station GS2 is not positioned within the surrounding search area AR1, the data of the gas station GS2 will not be recorded as real data; however, because the gas station GS2 is positioned within 2 kilometers from the target point p1 in terms of the linear distance, the data of the gas station GS2 will be recorded as dummy data in correspondence with the target point p1.

Because a gas station GS3 is not positioned within the surrounding search area AR1, the data of the gas station GS3 will not be recorded as real data; however, because the gas station GS3 is positioned within 2 kilometers from the target point p2 in terms of the linear distance, the data of the gas station GS3 will be recorded as dummy data in correspondence with the target point p2.

A gas station GS4 is positioned within the surrounding search area AR1, but is not positioned on the automobile-only road Hw1. In this situation, the data of the gas station GS4 will be recorded as real data. In addition, because the gas station GS4 is positioned within 2 kilometers from the target point p2 in terms of the linear distance, the data of the gas station GS4 will also be recorded as dummy data in correspondence with the target point p2.

Because the gas station GS5 is actually positioned within the surrounding search area AR1, the data of the gas station GS5 will be recorded as real data. In addition, because the gas station GS5 is positioned within 2 kilometers from the target point p3 in terms of the linear distance, the data of the gas station GS5 will also be recorded as dummy data in correspondence with the target point p3.

Because a gas station GS6 is not positioned within the surrounding search area AR1, the data of the gas station GS6 will not be recorded as real data; however, because the gas station GS6 is positioned within 2 kilometers from the target point p4 in terms of the linear distance, the data of the gas station GS6 will be recorded as dummy data in correspondence with the target point p4.

Next, the flowchart in FIG. 4 will be explained.
Step S1: Set target points pε.
Step S2: Follow the road from the target points pε.
Step S3: Judge whether there is any facility that is in the same category as a facility used as a target. In a case where there are one or more facilities that are in the same category as the facility used as the target, the process proceeds to step S4. In a case where there is no facility that is in the same category, the process ends.
Step S4: Generate dummy data.
Step S5: Record the dummy data in correspondence with the target points pε, and end the process.

In the present embodiment, the navigation apparatus 14 performs the display process so as to display a map on the map screen and also performs the route search process so as to conduct a search for a route. In this situation, when a surrounding search is conducted for a general road or the like, only the real data is used. However, when a surrounding search is conducted for the automobile-only road Hw1, both the real data and the dummy data are used.

Next, an operation that is performed by the surrounding search processing means when a surrounding search is conducted regarding a gas station GSδ, among the facilities in various categories, while the vehicle is driven along the searched route Rt will be explained. In this situation, not only the navigation apparatus 14 but also the information center 51 is able to perform the surrounding search. In this case, the surrounding search processing means that are included in the CPU 31 and the CPU 54 perform the same operation as each other. Thus, only the operation performed by the surrounding search processing means (i.e., a surrounding search processing unit 80) included in the CPU 31 of the navigation apparatus 14 will be explained. Explanation of the operation that is performed by the surrounding search processing means included in the CPU 54 of the information center 51 will be omitted.

FIG. 5 is a functional block diagram of the navigation apparatus according to the first embodiment of the present invention. FIG. 6 is a flowchart that shows an operation performed by the surrounding search processing means according to the first embodiment of the present invention. FIG. 7 is a drawing that shows an example of a category selecting screen according to the first embodiment of the present invention. FIG. 8 is a drawing that shows an example of a search result display screen according to the first embodiment of the present invention.

When a driver operates the operating unit 34 (FIG. 1) or the audio input unit 36 so as to instruct that a surrounding search should be conducted with regard to the searched route Rt (FIG. 2), a category display processing means (i.e., a category display processing unit 81), which is not shown in the drawing, that is included in the surrounding search processing unit 80 performs a category display process so as to provide a category selecting screen as shown in FIG. 7 and to display all the categories such as department stores, gas stations, golf courses and, hospitals. In this situation, when dummy data is included in the surrounding search data in any of the categories, (i.e., the "gas stations" category in the example of the present embodiment), a symbol D indicating that dummy data is included is appended to the category.

When the driver operates the operating unit 34 or the audio input unit 36 so as to select one of the categories, for example, the category "gas stations", a category judgment processing means (i.e., a category judgment processing unit 82) that is included in the surrounding search processing unit 80 performs a category judgment process so as to judge whether or not a category including dummy data has been selected. In a case where a category including dummy data has been selected, in other words, when the category "gas stations" has been selected, a surrounding search data obtainment processing means (i.e., a surrounding search data obtainment processing unit 83) that is included in the surrounding search processing unit 80 performs a surrounding search data obtainment process so as to obtain the surrounding search data by reading it from the data recording unit 16.

Next, a dummy data presence judgment processing means (i.e., a dummy data presence judgment processing unit 84) that is included in the surrounding search processing unit 80 performs a dummy data presence judgment process so as to judge whether or not the obtained surrounding search data includes dummy data. In a case where the obtained surrounding search data includes dummy data, a data judgment processing means (i.e., a data judgment processing unit 85) that is included in the surrounding search processing unit 80 performs a data judgment process so as to judge whether the dummy data matches the real data, based on the names and the coordinates of the gas stations. In a case where the dummy data matches the real data, the data judgment processing means judges whether there is any gas station positioned on the automobile-only road Hw1. In a case where one or more gas stations are positioned on the automobile-only road Hw1, in order to ensure that the dummy data and the real data will not be displayed in duplicate, a data change processing means (i.e., a data change processing unit 86) that is included in the surrounding search processing unit 80 performs a data change process so as to perform an internal process to use the dummy data as real data, so that the dummy data will be treated as real data in the surrounding search process. Conversely, in a case where no gas stations are positioned on the automobile-only road Hw1, the data change processing means performs an internal process while using the dummy data as real data and giving a priority to the dummy data, so that the dummy data will be treated as real data in the surrounding search process.

After that, a distance calculation processing means (i.e., a distance calculation processing unit 87) that is included in the surrounding search processing unit 80 performs a distance calculation process so as to calculate the distance from the current position to each of the gas stations, i.e., a distance Li (i = 1, 2, ...) between the current position and each facility, by referring to the surrounding search data. In this situation, with regard to the real data, the distance calculation processing means calculates the distance Li between the current position and each facility, based on a route distance measured from the current position to each of the gas stations along the road. With regard to the dummy data, the distance calculation processing means calculates the distance Li between the current position and each facility by adding a first distance and a second distance together, the first distance being a route distance measured from the current position to a target point pε corresponding to a gas station, and the second distance being a linear distance measured from the target point pε to the gas station. Another arrangement is acceptable in which, with regard to the dummy data, the distance calculation processing means calculates the distance Li between the current position and each facility by adding a first distance and a second distance together, the first distance being a route distance measured from the current position to a target point pε corresponding to a gas station, and the second distance being a route distance measured from the target point pε to the gas station.

For example, the gas station GS 1 shown in FIG. 2 is positioned within the surrounding search area AR1. Thus, both real data and dummy data are recorded as the surrounding search data. With regard to the real data, a distance L1 between the current position and the facility is calculated based on a link length of the actual road link that is a part of the automobile-only road Hw1 and the rampway Lw1. With regard to the dummy data, the distance L1 between the current position and the facility is calculated by adding a route distance and a linear distance together, the route distance being measured from the current position Pr to the target point p1, and the linear distance being measured from the target point p1 to the gas station GS1 and having been recorded in advance.

Because the gas station GS2 is not positioned within the surrounding search area AR1, only dummy data is recorded as the surrounding search data. Accordingly, a distance L2 between the current position and the facility is calculated by adding a route distance and a linear distance together, the route distance being measured from the current position Pr to the target point p1, and the linear distance being measured from the target point p1 to the gas station GS2.

Because the gas station GS3 is not positioned within the surrounding search area AR1, only dummy data is recorded as the surrounding search data. Accordingly, a distance L3 between the current position and the facility is calculated by adding a route distance and a linear distance together, the route distance being measured from the current position Pr to the target point p2, and the linear distance being measured from the target point p2 to the gas station GS3.

The gas station GS4 is positioned within the surrounding search area AR1. Thus, both real data and dummy data are recorded as the surrounding search data. With regard to the real data, a distance L4 between the current position and the facility is calculated by adding a link length of the road link and a linear distance together, the road link being a part of the automobile-only road Hw1 up to a location point positioned close to the gas station GS4, and the linear distance being measured from the automobile-only road Hw1 to the gas station GS4. With regard to the dummy data, a distance L4 between the current position and the facility is calculated by adding a route distance and a linear distance together, the route distance being measured from the current position Pr to the target point p1, and the linear distance being measured from the target point p1 ta the gas station GS4.

The gas station GS5 is positioned within the surrounding search area AR1. Thus, both real data and dummy data are recorded as the surrounding search data. With regard to the real data, a distance L5 between the current position and the facility is calculated based on the link length of the actual road link that is a part of the aatoinobile-only road Hw1 and the ramp way Lw5. With regard to the dummy data, a distance L5 between the current position and the facility is calculated by adding a route distance and a linear distance together, the route distance being measured from the current position Pr to the target point p3, and the linear distance being measured from the target point p3 to the gas station GS5.

Because the gas station GS6 is not positioned within the surrounding search area AR1, only dummy data is recorded as the surrounding search data. Accordingly, a distance L6 between the current position and the facility is calculated by adding a route distance and a linear distance together, the route distance being measured from the current position Pr to the target point p4, and the linear distance being measured from the target point p4 to the gas station GS6 and having been recorded as dummy data.

Subsequently, a search processing means (i.e., a search processing unit 88) that is included in the surrounding search processing unit 80 performs a search process so as to conduct a search for gas stations by selecting a predetermined number of dummy data and real data of the gas stations, in an ascending order of the distance Li between the current position and the facility, starting with the gas station having the shortest distance Li. A search result display processing means (i.e., a search result display processing unit 89) that is included in the surrounding search processing means 80 performs a search result display process so as to provide a search result display screen as shown in FIG. 8 on the displaying unit 35 and to display a search result, i.e., the gas stations that have been found in the search, in a list. The search result display processing means is included in a distance guidance output processing means (i.e., a distance guidance output processing unit). The distance guidance output processing means performs a distance guidance output process so as to output distance guidance regarding the distance to the facilities to the displaying unit 35.

For example, for the gas stations GS1 and GS5 shown in FIG. 2, both the dummy data and the real data are recorded as the surrounding search data. However, because the dummy data matches the real data, and also the gas stations GS 1 and GS5 are positioned on the automobile-only road Hw1, the dummy data is treated as real data. The distance L1 between the current position and the facility will be displayed as 2.5 kilometers, which is obtained by adding a route distance of 2 kilometers and a linear distance of 0.5 kilometers together. The distance L5 between the current position and the facility will be displayed as 6.5 kilometers, which is obtained by adding a route distance of 6 kilometers and a linear distance of 0.5 kilometers together. For the gas stations GS2, GS3, and GS6, only the dummy data is recorded as the surrounding search data. The distance L2 between the current position and the facility will be displayed by using the method of adding a route distance of 2 kilometers and a linear distance of 1 kilometer together. The distance L3 between the current position and the facility will be displayed by using the method of adding a route distance of 2.5 kilometers and a linear distance of 0.5 kilometers together. The distance L6 between the current position and the facility will be displayed by using the method of adding a route distance of 9 kilometers and a linear distance of 1 kilometer together. Further, for the gas station GS4, both the dummy data and the real data are recorded as the surrounding search data. However, because the dummy data matches the real data, and also the gas station GS4 is not positioned on the automobile-only road Hw1, the dummy data is treated with a priority. The distance L4 between the current position and the facility will be displayed by using the method of adding a route distance of 2 kilometers and a linear distance of 1.5 kilometers together. The symbols D are appended so as to indicate that the distances L2, L3, and L6 between the current position and the facilities respectively correspond to the gas stations GS2, GS3, and GS6 for which only the dummy data has been recorded as the surrounding search data and that the distance L4 between the current position and the facility corresponds to the gas station GS4 for which the dummy data has been treated with a priority.

On the other hand, in a case where the driver does not select a category that includes dummy data on the category selecting screen but selects, for example, the category "department stores", the surrounding search data obtainment processing means obtains the surrounding search data. The distance calculation processing means then calculates a distance Li between the current position and the facility based on a route distance measured from the current position to each of the department stores, by referring to the surrounding search data.

After that, the search processing means conducts a search for department stores by selecting only the real data of the department stores, in an ascending order of the distance between the current position and the facility, starting with a department store having the shortest distance. The search result display processing means displays, in a list, the department stores that have been found in the search.

Similarly, in a case where the obtained surrounding search data does not include dummy data, or in a case where the surrounding search data includes dummy data but the dummy data does not match the real data, the distance calculation processing means calculates a distance Li between the current position and each facility based on a route distance measured from the current position to each of the gas stations, by referring to the surrounding search data. The search processing means then conducts a search for gas stations in an ascending order of the distance Li between the current position and the facility, starting with a gas station having the shortest distance Li, based on the real data and the dummy data. The search result display processing means displays, in a list, the gas stations that have been found in the search.

As explained above, according to the present embodiment, with respect to each of the roads, the dummy data is generated for the facilities that are positioned within the surrounding search area AR1. In addition, with regard to the facilities that satisfy the data generation condition, the dummy data is generated so that the facilities are used as the targets for which the surrounding search is conducted. Thus, it is possible to easily conduct a search for the most appropriate facility for the driver, for example, a facility that the driver is able to reach in a short period of time. Consequently, it is possible to not only simplify the operation performed on the operating unit 34 but also enhance the level of efficiency of the search.

Further, for example, in a case where a certain facility is positioned on a general road within the surrounding search area AR1 but does not satisfy the data generation condition, dummy data will not be generated, and the facility will not be used as the target for which the surrounding search is to be conducted. Thus, the facilities that are not reachable will not be displayed in a list as a search result.

Next, the flowchart in FIG. 6 will be explained.
Step S11: Display all the categories.
Step S12: Select one of the categories.
Step S 13: Judge whether a category including dummy data has been selected. In a case where a category including dummy data has been selected, the process proceeds to step S14. In a case where no category including dummy data has been selected, the process proceeds to step S15.
Step S 14: Obtain surrounding search data.
Step S 15: Obtain surrounding search data, and the process proceeds to step S22.
Step S16: Judge if there is any dummy data. If there is dummy data, the process proceeds to step S17. If there is no dummy data, the process proceeds to step S22.
Step S 17: Compare dummy data with real data.
Step S18: Judge whether the dummy data matches the real data. In a case where the dummy data matches the real data, the process proceeds to step S19. In a case where the dummy data does not match the real data, the process proceeds to step S22.
Step S19: Judge whether each facility is positioned on the automobile-only road Hwi. In a case where the facility is positioned on the automobile-only road Hw1, the process proceeds to step S20. In a case where the facility is not positioned on the automobile-only road Hw1, the process proceeds to step S21.
Step S20: Perform an internal process while using the dummy data as real data.
Step S21: Perform an internal process while giving a priority to the dummy data.
Step S22: Perform a distance calculation process.
Step S23: Display the search result in a list, and the process ends.

According to the present embodiment, the data generating apparatus 61 generates the surrounding search data; however, it is also possible to generate surrounding search data by using the CPU 31 or the CPU 54. In this situation, the CPU 31 or the CPU 54 includes a surrounding search data generation processing means, so that the surrounding search data generation processing means performs a surrounding search data generation process so as to generate the surrounding search data and to record the generated surrounding search data into the data recording unit 16.

The surrounding search data obtainment processing means is included in a surrounding facility search processing means (i.e., a surrounding facility search processing unit). The surrounding facility search processing means performs a surrounding facility search process so as to conduct a search for the facilities that are positioned in the surroundings of the current position.

In addition, while the vehicle is driven, the CPU 31 is able to conduct a search for the facilities that are positioned in the surroundings of a current position, based on the data recorded in the data recording unit 16. In this situation, the driver of the vehicle operates the operating unit 34 (FIG. 1) or the audio input unit 36 and instructs that a surrounding search should be conducted with regard to the searched route Rt (FIG. 2). Then, a facility search processing means (i.e., a facility search processing unit), which is not shown in the drawing, that is included in the surrounding search processing unit 80 performs a facility search process so as to conduct a search for the facilities that are positioned in the surroundings of the current position, according to the facility data recorded in the data recording unit 16 based on the current position. Subsequently, a road judgment processing means (i.e., a road judgment processing unit) that is included in the surrounding search processing unit 80 performs a road judgment process so as to judge whether the road on which the vehicle is currently being driven is an automobile-only road Hwi. In a case where the road on which the vehicle is currently being driven is an automobile-only road Hwi, the distance calculation processing means calculates a distance Li between the current position and the facility as described above, based on the current position and the data recorded in the data recording unit 16.

As additional information, according to the present embodiment, for example, in a case where a facility is positioned on a rampway that is located on the inside of an exit, like the gas stations GS1, GS5, and GS6 shown in FIG. 2 that are respectively positioned on the rampways Lw1, Lw5, and Lw6 located on the inside of the exits, because only the dummy data is recorded as the surrounding search data for the gas station GS6, the distance L6 between the current position and the facility is displayed while the symbol D is appended thereto. On the other hand, for the gas stations GS1 and GS5, both the real data and the dummy data are recorded as the surrounding search data, and an internal process is performed while using the dummy data as real data. Thus, the distances L1 and L5 between the current position and each facility are displayed while no symbol D is appended thereto.

As a result, the driver will not be able to judge whether he/she needs to go out from an exit in order to use the gas station GS1 or GS5.

FIG. 9 is a drawing that shows an example of a search result display screen according to a second embodiment of the present invention.

In this example, for the gas stations GS1 and GS5, in order to indicate that these gas stations are respectively positioned on the rampways Lw1 and Lw5 that are located on the inside of the exits of the searched route Rt (FIG. 2), in other words, these gas stations are positioned on the automobile-only road Hw1, a symbol R is appended to the distance L1 and to the distance L5 between the current position and the facilities. To realize this arrangement, the road judgment processing means judges whether the gas stations GS1 and GS5 are each positioned on the automobile-only road Hw1 and forwards the result of the judgment to the search result display processing means. In a case where the gas stations GS 1 and/or GS5 are positioned on the automobile-only road Hw1, the search result display processing means appends the symbol R to the distance L1 and/or to the distance L5 in order to indicate the judgment result.

In the embodiments described above, the surrounding search data is recorded on the disk; however, it is acceptable to record the surrounding search data on any recording medium other than disks.

The present invention is not limited to the embodiments described above. It is possible to modify the present invention in various manners based on the gist of the present invention. Those modifications are not excluded from the scope of the present invention.

### INDUSTRIAL APPLICABILITY

It is possible to apply the present invention to navigation apparatuses.

## Claims

1. A surrounding search data generating system **characterized by** comprising:
a facility judgment processing means for judging whether a predetermined facility is positioned within a surrounding search area that is specified along a road having an entrance and an exit;
a first data generation processing means for generating, in a case where the predetermined facility is positioned within the surrounding search area, data of the predetermined facility as first data;
a target point setting processing means for setting, at a predetermined location, a target point used as a target for generating second data;
a condition satisfaction judgment processing means for judging whether there is any facility that satisfies a predetermined data generation condition;
a second data generation processing means for generating, in a case where there are one or more facilities that satisfy the predetermined data generation condition, data of the one or more facilities that satisfy the predetermined data generation condition as second data, in correspondence with the target point; and
a data record processing means for recording the first data and the second data onto a recording medium.

2. The surrounding search data generating system according to claim 1, wherein the surrounding search area is specified along the road that is predetermined.

3. The surrounding search data generating system according to claim 1 or 2, wherein
the one or more facilities that satisfy the predetermined data generation condition are one or more facilities each of which is positioned within a threshold value of a distance from the target point.

4. The surrounding search data generating system according to claim 1, wherein the target point is set within the surrounding search area.

5. The surrounding search data generating system according to claim 1, wherein
the target point is set in correspondence with an exit of an automobile-only road.

6. The surrounding search data generating system according to claim 1, wherein
the target point is set in correspondence with a junction of an automobile-only road.

7. The surrounding search data generating system according to claim 1, wherein
the target point is set in correspondence with a stop-over area on an automobile-only road.

8. A surrounding search system **characterized by** comprising:
a surrounding search data obtainment processing means for obtaining surrounding search data that has been generated in order to conduct a search for a facility that is positioned in surroundings of a route that has been specified in advance or a current position of a vehicle;
a search processing means for conducting the search for the facility based on the obtained surrounding search data; and
a search result display processing means for displaying a search result on a displaying unit, wherein
the surrounding search data includes first data regarding one or more facilities each of which is positioned within a surrounding search area that is specified in advance and second data regarding one or more facilities each of which satisfies a predetermined data generation condition.

9. The surrounding search system according to claim 8, wherein
the search result display processing means displays a distance between the current position and each of the facilities in the first data and the second data, for each of the facilities that have been detected.

10. The surrounding search system according to claim 8, wherein
in a case where the first data and the second data are duplicate, the search result display processing means displays a distance between the current position and each of the facilities in the second data, while giving a priority to the second data.

11. The surrounding search system according to claim 8, wherein
in a case where the first data and the second data are duplicate, the search result display processing means displays a distance between the current position and each of the facilities in the first data, while giving a priority to the first data.

12. The surrounding search system according to claim 8, wherein
in a situation where any of the facilities in the first data are positioned on inside of an exit of an automobile-only road, the search result display processing means displays information indicating the situation.

13. The surrounding search system according to claim 9, wherein
the distance between the current position and each of the facilities in the second data is calculated by adding a distance from the current position to a target point that has been set at a predetermined location point positioned within the surrounding search area to a distance from the target point to each of the facilities in the second data.

14. The surrounding search system according to claim 8, comprising a surrounding search data generation processing means for generating the surrounding search data.

15. A surrounding search data generating method **characterized by** comprising:
judging whether a predetermined facility is positioned within a surrounding search area that is specified along a road having an entrance and an exit;
generating, in a case where the predetermined facility is positioned within the surrounding search area, data of the predetermined facility as first data;
setting, at a predetermined location, a target point used as a target for generating second data;
judging whether there is any facility that satisfies a predetermined data generation condition;
generating, in a case where there are one or more facilities that satisfy the predetermined data generation condition, data of the one or more facilities that satisfy the predetermined data generation condition as second data, in correspondence with the target point; and
recording the first data and the second data onto a recording medium.

16. A surrounding search method **characterized by** comprising:
obtaining surrounding search data that has been generated in order to conduct a search for a facility that is positioned in surroundings of a route that has been specified in advance or a current position of a vehicle;
conducting the search for the facility based on the obtained surrounding search data; and
displaying a search result on a displaying unit, wherein
the surrounding search data includes first data regarding one or more facilities each of which is positioned within a surrounding search area that is specified in advance and second data regarding one or more facilities each of which is positioned on outside of the surrounding search area and satisfies a predetermined data generation condition.

17. A navigation apparatus **characterized by** comprising:
a current position detecting unit that detects a current position;
a storage device that has recorded therein at least a map and information of facilities;
an input unit used for instructing that a search should be conducted for a facility that is positioned in surroundings of the current position;
a surrounding facility search processing means for conducting the search for the facility that is positioned in the surroundings of the current position, based on the map and the information of the facilities that have been recorded in the storage device, according to an operation performed on the input unit;
a road judgment processing means for judging whether a road on which a vehicle is currently being driven is a road of which exits are limited, based on the current position; and
a distance guidance output processing means for outputting, in a case where the road on which the vehicle is currently being driven is a road of which the exits are limited, distance guidance to drive to the facility according to a distance from the current position to a target point and a distance from the target point to the facility, the target point being set at a predetermined location point positioned within a surrounding search area that has been specified along the road.
